(19) Europäisches Patentamt / European Patent Office / Office européen des brevets

(11) **EP 4 300 309 A1**

(12) **EUROPEAN PATENT APPLICATION**
published in accordance with Art. 153(4) EPC

(43) Date of publication:
**03.01.2024 Bulletin 2024/01**

(21) Application number: **22773896.0**

(22) Date of filing: **17.01.2022**

(51) International Patent Classification (IPC):
*G06F 9/50* (2006.01)    *G06F 9/455* (2018.01)
*G06Q 30/06* (2023.01)    *G06Q 30/02* (2023.01)
*G06F 16/2455* (2019.01)

(52) Cooperative Patent Classification (CPC):
**G06F 9/5027; G06F 9/455; G06F 9/5016;**
**G06F 16/2455; G06Q 30/02; G06Q 30/06**

(86) International application number:
**PCT/CN2022/072430**

(87) International publication number:
**WO 2022/199234 (29.09.2022 Gazette 2022/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.03.2021  CN 202110314039**

(71) Applicant: **Huawei Cloud Computing**
**Technologies Co., Ltd.**
**Guizhou 550025 (CN)**

(72) Inventors:
• **MA, Shijia**
  **Shenzhen, Guangdong 518129 (CN)**
• **XIE, Huaguo**
  **Shenzhen, Guangdong 518129 (CN)**

(74) Representative: **MERH-IP Matias Erny Reichl**
**Hoffmann**
**Patentanwälte PartG mbB**
**Paul-Heyse-Strasse 29**
**80336 München (DE)**

(54) **METHOD AND APPARATUS FOR PROVIDING CLOUD SERVICE, AND DEVICE**

(57)    A method for providing a cloud service is provided, to effectively improve a purchase success rate of a virtual machine and customer experience. The method includes: receiving a service request sent by a terminal, where the service request includes information about a total resource quantity required by a user; and providing one or more cloud service solutions for the terminal, where at least one of the one or more cloud service solutions includes a plurality of virtual machines, and a total resource quantity of the virtual machines in the one or more cloud service solutions meets the information about the total resource quantity in the service request.

FIG. 2

**Description**

**TECHNICAL FIELD**

The present invention relates to the field of cloud computing technologies, and in particular, to a method and an apparatus for providing a cloud service, and a device.

**BACKGROUND**

In cloud computing, hardware infrastructure can be virtualized and pooled in a unified manner, and these virtualization resources are combined into a virtual machine (virtual Machine, VM). The virtualization resources include a CPU, memory, a network, storage, and the like. Based on this virtualization technology, a plurality of isolated virtual machines can be virtualized on a physical machine, and a cloud service provider sells these virtual machines to a tenant. Specifications such as different memory ratios, different disks, different types of network adapters, and different CPU hardware are configured, so that the cloud service provider can provide computing products with different performance to meet different requirements of the tenant.

**SUMMARY**

This application provides a method and an apparatus for providing a cloud service, a device, a computer readable storage medium, and a computer program product, to effectively improve a purchase success rate of a virtual machine and customer experience.

According to a first aspect, this application provides a method for providing a cloud service. The method includes: receiving a service request sent by a terminal, where the service request includes information about a total resource quantity required by a user; and sending one or more cloud service solutions to the terminal, where at least one of the one or more cloud service solutions includes a plurality of virtual machines, and a total resource quantity of the virtual machines in the one or more cloud service solutions meets the total resource quantity in the service request.

In this method, a customer does not need to specify a specification or a quantity of specific virtual machines. Instead, a cloud platform directly provides the one or more cloud service solutions (where the cloud service solutions include the plurality of virtual machines) for the user based on the total resource quantity required and input by the user, to meet a requirement of the user. This effectively avoids a problem in a conventional technology that a purchase failure occurs due to an insufficient inventory when the virtual machines are being purchased.

Optionally, the cloud service solution includes a specification and a corresponding quantity of the virtual machines that the user needs to purchase.

In a possible design of the first aspect, the information about the total resource quantity includes at least one of the following information: information about a total CPU quantity and information about a total memory quantity.

The information about the total CPU quantity and the information about the total memory quantity may effectively describe the information about the total resource quantity in the service request of the user. The cloud platform provides, based on the information about the total CPU quantity and the information about the total memory quantity that are input by the user, a cloud service solution that meets the requirement of the user.

In a possible design of the first aspect, the service request further includes resource performance information, and resource performance of the virtual machines in the one or more cloud service solutions meets the resource performance information in the service request.

The resource performance information is for describing a performance characteristic of a resource. The user may further limit performance of the resource based on the requirement of the user, to purchase more suitable virtual machines.

In a possible design of the first aspect, the resource performance information includes an underlying resource performance parameter, and the underlying resource performance parameter includes at least one of the following: a CPU model, a CPU frequency, a memory model, a memory frequency, a GPU parameter, network performance, and storage read/write performance.

The foregoing described underlying resource performance parameter may be for limiting specific performance of a CPU and memory in the total resource quantity that is input by the user, to help the user more accurately filter out virtual machines that meet the resource parameter.

In a possible design of the first aspect, the resource performance information includes at least one of the following information: a virtual machine capability type and a service scenario type, where the virtual machine capability type indicates computing, storage, and network capabilities of the virtual machine, and the service scenario type indicates a service scenario to which the virtual machine is applicable.

The user may further limit the performance of the resource by selecting or inputting the virtual machine capability type and the service scenario type. The virtual machine capability type and the service scenario type are easier to be understood, to help the user more intuitively determine the resource performance information needed by the user.

In a possible design of the first aspect, the information about the total CPU quantity includes at least one of the following information: the total CPU quantity, a maximum value of the total CPU quantity, and a minimum value of the total CPU quantity; and the information about the total memory quantity includes at least one of the following information: the total memory quantity, a maximum value of the total memory quantity, and a minimum value of the total memory quantity.

The user can flexibly limit a total quantity of required resources based on the total CPU quantity, the maximum value of the total CPU quantity, the minimum value of the total CPU quantity, the total memory quantity, the maximum value of the total memory quantity, and the minimum value of the total memory quantity. The cloud platform can provide more cloud service solutions based on the information.

In a possible design of the first aspect, the service request further includes price information specified by the user, and a price of the one or more cloud service solutions meets the price information specified by the user.

The cloud platform can filter out cloud service solutions that meet an ideal price requirement of the user based on the price information specified by the user, to improve purchase experience of the user.

In a possible design of the first aspect, the cloud service is provided for the user based on a target cloud service solution selected by the user from the one or more cloud service solutions.

The user may select a cloud service solution on the terminal, and the cloud platform provides a corresponding purchase service for the user based on the selected solution.

Optionally, the user may further modify the selected cloud service solution.

According to a second aspect, this application provides an apparatus for providing a cloud service. The apparatus includes a plurality of functional modules, configured to implement different steps of the method provided in the first aspect or any possible design of the first aspect.

According to a third aspect, this application provides a device, including a processor and a memory. The processor executes instructions stored in the memory, so that the device performs the method provided in the first aspect or the possible designs of the first aspect.

This application provides a device, including a processor and a memory. The processor executes instructions stored in the memory, so that the apparatus provided in the second aspect is deployed in the device.

According to a fourth aspect, this application provides a computer-readable storage medium. The computer-readable storage medium stores instructions. When a processor of a device executes the instructions, the device performs the method provided in the first aspect or the possible designs of the first aspect.

This application provides a computer-readable storage medium. The computer-readable storage medium stores instructions. When a processor of a device executes the instructions, the device implements the apparatus provided in the second aspect.

According to a fifth aspect, this application provides a computer program product. The computer program product includes instructions, and the instructions are stored in a computer-readable storage medium. A processor of a device may read the instructions from the computer-readable storage medium, and the processor executes the instructions, so that the device performs the method provided in the first aspect or the possible designs of the first aspect.

This application provides a computer program product. The computer program product includes instructions, and the instructions are stored in a computer-readable storage medium. A processor of a device may read the instructions from the computer-readable storage medium, and the processor executes the instructions, so that the device implements the apparatus provided in the second aspect.

**BRIEF DESCRIPTION OF DRAWINGS**

FIG. 1 is a schematic diagram of an example of a network architecture according to an embodiment of this application;
FIG. 2 is a schematic flowchart of an example of a method for providing a cloud service according to an embodiment of this application;
FIG. 3(a) is a schematic diagram of an example of a requirement collection interface according to an embodiment of this application;
FIG. 3(b) is a schematic diagram of an example of a requirement collection interface according to an embodiment of this application;
FIG. 3(c) is a schematic diagram of an example of a requirement collection interface according to an embodiment of this application;
FIG. 3(d) is a schematic diagram of an example of a requirement collection interface according to an embodiment of this application;

FIG. 3(e) is a schematic diagram of an example of a requirement collection interface according to an embodiment of this application;

FIG. 3(f) is a schematic diagram of an example of a requirement collection interface according to an embodiment of this application;

FIG. 4 is a schematic diagram of an example of a purchasing manner selection interface according to an embodiment of this application;

FIG. 5 is a schematic flowchart of an example of a method for generating a cloud service solution by a cloud platform according to an embodiment of this application;

FIG. 6 is a schematic diagram of an example of a cloud service solution return interface according to an embodiment of this application;

FIG. 7 is a schematic diagram of an example of a structure of an apparatus 210 according to an embodiment of this application; and

FIG. 8 is a schematic diagram of an example of a structure of a computing device 300 according to an embodiment of this application.

## DESCRIPTION OF EMBODIMENTS

A network architecture and service scenarios described in embodiments of the present invention are intended to describe technical solutions of embodiments of the present invention more clearly, and do not constitute a limitation on the technical solutions provided in embodiments of the present invention. Persons of ordinary skill in the art may know that, with evolution of the network architecture and emergence of new service scenarios, the technical solutions provided in embodiments of the present invention are also applicable to similar technical problems. It should be noted that the terms used in embodiments of the present invention are merely for the purpose of illustrating specific embodiments, and are not intended to limit the present invention.

The following describes the technical solutions in embodiments of the present invention with reference to the accompanying drawings in embodiments of the present invention.

For ease of understanding of embodiments of this application, some terms in this application are first explained and described.

Cloud platform: A cloud platform can provide cloud service-related pages for a tenant to remotely access a cloud service based on a cloud computing technology. The tenant can log in to the cloud platform (for example, huaweicloud.com) on a terminal using a preregistered account and password. After the login is successful, the tenant can select and purchase a corresponding cloud service, such as a virtual machine, a container, or an OBS on an access page. For example, after a cloud service instance is successfully created, the tenant can use an instance on the cloud platform as if the tenant is using his/her own local PC or a physical server.

Instance: An instance is a minimum unit for providing a computing service on a cloud platform. Different instance specifications provide different computing capabilities and can be used in different service scenarios. For example, a virtual machine product provided on the cloud platform is a type of instance.

Specification: The cloud service provider may release a series of instance specifications on the cloud platform. The instance specifications define the basic attributes of an instance, including a CPU and memory (including a CPU model, frequency, and the like). In practice, a specific service form of an instance can be determined based on storage, an image, and a network type. These specifications are released by a cloud service provider based on user requirements, a resource quantity, and sales. For example, s6.1arge.2 provided on huaweicloud.com is a name of model or specification. This corresponds to an instance that includes 2 vCPUs, 4 GB memory, an Intel Cascade Lake 2.6 GHz processor, and 0.2/1.5 Gbit/s bandwidth.

Computing power: Computing power is for measuring a computing capability of an instance, to be specific, a quantity of tasks completed per unit time. The computing power of the instance is related to a plurality of aspects, such as a processor, memory, and a network.

Resource pool: A resource pool refers to a virtual resource layer in a cloud computing architecture. In essence, the resource pool schedules a plurality of application job instances and underlying physical resource devices or device clusters in time division and space division mode. The virtual resource layer includes computing virtualization, storage virtualization, and network virtualization. Computing virtualization is used as an example. A layer of elastic computing resource management and virtualization software is inserted between upper-layer software and bare-metal hardware, so that the upper-layer software still exclusively occupies underlying CPU, memory, and input/output (Input/Output, I/O) resources.

Price: A price varies depending on an instance specification.

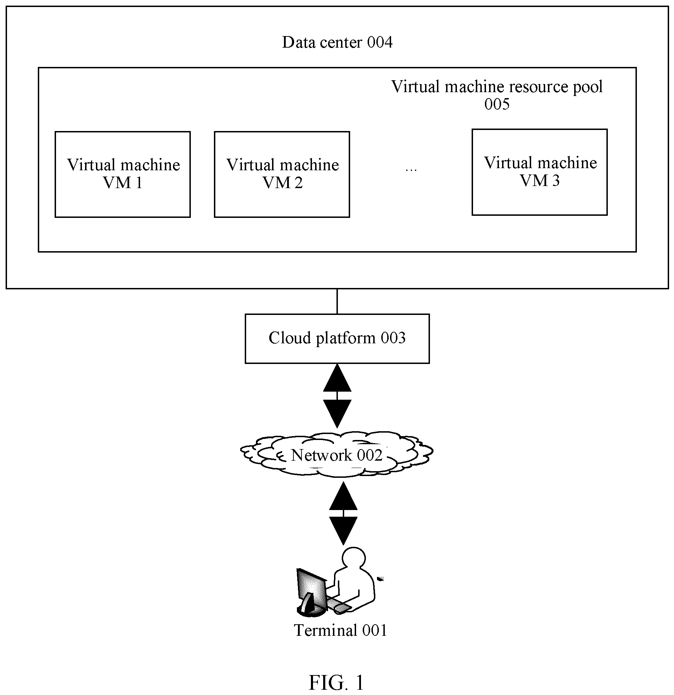

FIG. 1 is a schematic diagram of an example of a network architecture according to an embodiment of this application.

As shown in FIG. 1, a terminal 001, a network 002, a cloud platform 003, a data center 004, and a resource pool 005 are included in the figure. A user of a cloud platform may access the cloud platform 003 via the network 002 on the terminal 001.

The terminal 001 may be any other terminal device such as a mobile phone, a computer, or a tablet, and may communicate with the cloud platform via the network 002, to implement communication with the cloud platform 003.

An example of a manner in which the terminal accesses the cloud platform is as follows: For example, software of a client of the cloud platform 003 is installed on the terminal 001 device, and the user accesses the cloud platform 003 through the client. For another example, the terminal 001 directly accesses, through a browser, a web page provided by the cloud platform 003.

The network 002 may be a public network such as the Internet, a private network such as an internal network of an organization, a hybrid network in which a public network and a private network coexist, or the like. From a technical perspective, the network 130 may include a wired network and a wireless network, such as a wired network, a Wi-Fi network, a mobile communication network (such as 3G, 4G, and 5G), a wide area network, a local area network, and other networks.

The cloud platform 003 provides a cloud service based on one or more servers 006 (not shown in the figure). The server 006 may be a rack server or a blade server. A specific form of the server is not limited in this application. The cloud platform 003 may be configured in the data center 004 or another data center of the cloud service provider. The cloud platform 003 may be a platform that provides a related cloud computing service based on a public cloud, a private cloud, a hybrid cloud, or the like.

When using a cloud service, the user may purchase and create an instance on the cloud platform 003 based on an interface displayed on the terminal 001. The instance may include an instance in another form of computing or storage, such as a virtual machine, a container, or a bare metal server. The data center 004 includes the virtualized resource pool 005. The resource pool 005 includes various virtualization resources such as virtual machines (such as a VM 1, a VM 2, and a VM 3). The cloud platform 002 may access information about various resources in the resource pool 005, to feed back purchase of the user. These virtual machines may be deployed on physical machines in one or more data centers.

In a conventional technology, when a quantity of resources in the resource pool is less than a (minimum) quantity requested by the user, a purchase (or creation) request of the user may fail. The following uses purchase of the virtual machines on huaweicloud.com as an example. A user A requests to purchase 100 ecs.g6e.2xlarge instances, but the cloud platform finds that a quota of instances in an availability zone is less than 100. Therefore, the purchase of the user A may fail. In this case, the user does not know whether an insufficient part of the purchase request can be replaced with another instance model, or a plurality of combined instance specifications can be purchased, to meet a service requirement of the user.

For the foregoing problem, embodiments of this application provide a method for purchasing resources on the cloud platform, so that inventory resources can be combined based on the service requirement of the user and then provided for the user. The service requirement includes a total quantity of underlying resources that the user needs. According to the method provided in embodiments of this application, a customer does not need to specify a specific specification of an instance or a quantity of instances. Instead, the cloud platform directly provides a purchase combination (including a specification of an available instance and the quantity of instances) for the user, to meet a user requirement. This improves a purchase success rate and customer experience.

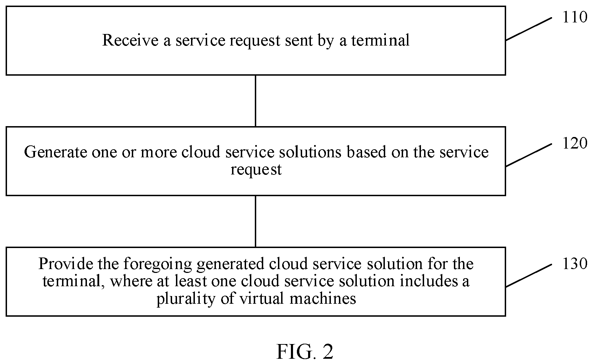

FIG. 2 is a schematic flowchart of an example of a method for purchasing a resource on a cloud platform according to an embodiment of this application. FIG. 2 includes step 110 to step 130, where step 120 further includes substep 121 to step 123. The method specifically includes:

Step 110: Receive a service request sent by a terminal.

A server 005 receives the service request sent by a terminal 001. The service request includes a service requirement input by a user, where the server 005 is a computing device configured to deploy a cloud platform 003. The service requirement in the service request is input by the user on a user interface (User interface, UI) of the cloud platform. The service requirement includes a total quantity of resources required by the user. The resources herein may be any service resource provided on the platform.

The total quantity of resources may include a total quantity of underlying resources. For example, the user may input a total quantity of required CPUs and a total memory size on a requirement collection interface. Usually, on a cloud platform, a user cannot separately purchase or use underlying resources such as a CPU, memory, a network, and storage. Such underlying resources need to be based on a virtual machine or a physical machine, so that related services are provided for the user.

In an optional implementation, in addition to the foregoing total resource quantity, the service requirement may further include resource performance information. The resource performance information may be for further limiting various types of resources in the total resource quantity. The cloud platform filters resources in a resource pool based on the resource performance information, to find a resource that better meets the service requirement of the user, instead of allocating a specification of an instance and a quantity of instances to the user based on only the input total resource quantity.

The instance in this application may be a computing instance that is on the cloud platform and that provides a computing service for the user. In other words, the instance in this application may be a virtual machine.

Optionally, the foregoing resource performance information may be a performance parameter related to the underlying resource, for example, a CPU model, CPU frequency, a memory model, a memory frequency, and a local disk type, and may further include a GPU parameter, a network adapter model, a network performance parameter, a storage performance parameter, and the like. The CPU parameter may be a parameter such as the GPU model or a memory size. The network performance parameter may be a parameter such as a network latency or the network adapter model. The storage performance parameter is a parameter such as a disk model or an IOPS (Input/Output Operations Per Second).

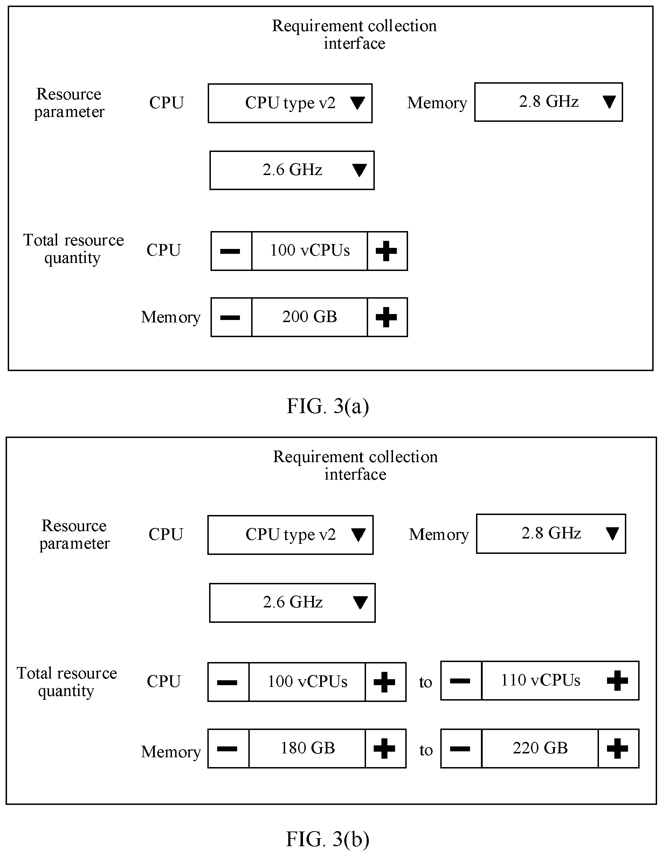

FIG. 3(a) is a schematic diagram of an example of a requirement collection interface according to an embodiment of this application. The user may input, in the interface in FIG. 3(a), the performance parameters and the total resource quantity that are related to the underlying resources. For example, in a "resource parameter" column, the user may input (or select) a CPU type v2, a CPU dominant frequency 2.6 GHz, and a memory dominant frequency 2.8 GHz as the performance parameters of the underlying resources. The user may also input 100 vCPUs and 200 GB memory in a "total resource quantity" column as a total quantity of CPUs and memory to be purchased.

It should be noted that, because a virtual machine does not directly sense a physical CPU, a computing unit of the virtual machine in cloud computing is generally presented by using an object of vCPUs. The virtual machine only sees the vCPUs provided by a virtual machine manager (Virtual Machine Manager, VMM). In the VMM, each vCPU corresponds to a VMCS virtual-machine control structure (Virtual-Machine Control Structure). For a physical machine, a total quantity of provided vCPUs (logical processors) = a socket quantity (quantity of physical CPUs) x a core quantity (inner cores) x a thread quantity (hyper-threading).

Optionally, the performance parameters of the underlying resources may be selectively set by the user, in other words, the user may not select or select only some of the parameters. For example, the user may select only the CPU model, and does not set other parameters. Optionally, for a single parameter item herein, the user may select a plurality of values. For example, the user may select a plurality of CPU models or all models (not shown in the figure).

In a possible implementation, the total resource quantity may be further described as a minimum total purchase quantity and a maximum total purchase quantity of the resources. For example, as shown in FIG. 3(b), the "total resource quantity" column shows an upper limit and a lower limit of a CPU purchase quantity: 100 vCPUs and 110 vCPUs, and an upper limit and a lower limit of a memory purchase quantity: 180 GB memory and 220 GB memory. Optionally, the user may alternatively select only an upper limit or a lower limit. For example, when the user selects a lower limit of a purchase quantity, it means that a corresponding instance can be successfully created for the user as long as a resource pool inventory meets the lower limit.

Optionally, the foregoing resource performance information may also be a service scenario required by the user. In practice, the user may not be able to determine which performance parameter of the underlying resources to be selected. Therefore, the embodiment of this application further provides keywords of service scenarios to determine a resource performance requirement of the user. For example, the keywords used to describe the service scenarios may be: getting started, website, internet of things, e-commerce, database, machine learning, video, game, in-memory database, graphics rendering, big data, supercomputing, and the like. The user enters or selects a service scenario keyword on the user interface, and the cloud platform can filter a resource inventory that meets the service requirements of the user based on the received service scenario.

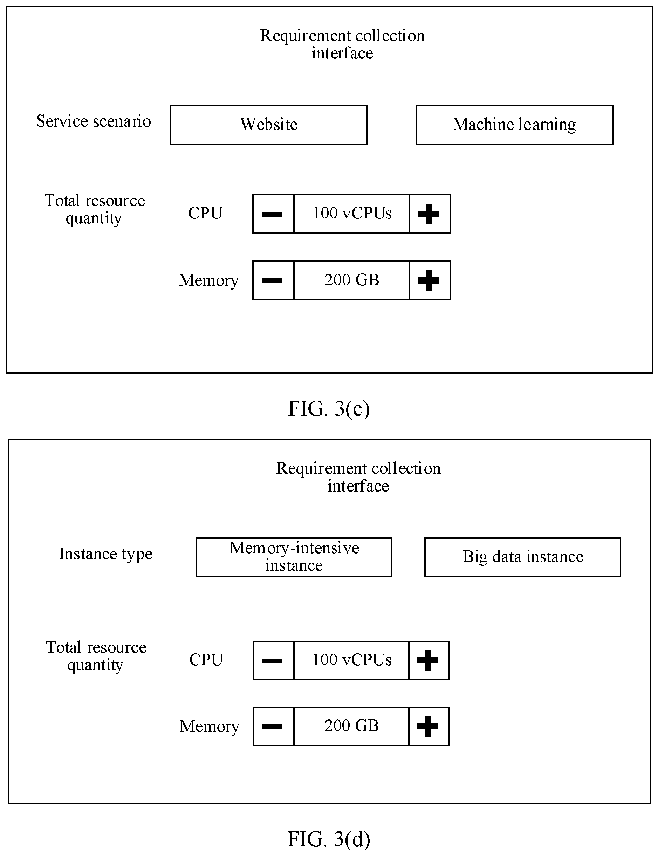

FIG. 3(c) is a schematic diagram of an example of a requirement collection interface according to an embodiment of this application. A user may select a service scenario and a total resource quantity on the interface in FIG. 3(c). In a "service scenario" column, the user may input (or select) a tag that meets the service scenario, such as "website" or "machine learning".

Optionally, the user may further select tags of a plurality of service scenarios at the same time. For example, if the user selects "website", "E-commerce", and "database" tags, the cloud platform can filter an instance inventory based on the resources corresponding to the three tags.

Optionally, the foregoing resource performance information may alternatively be instance types required by the user. The instance types are for describing performance characteristics of instances, such as general-purpose instances, memory-intensive instances, high-performance computing instances, local disk instances, and computing-accelerated instances. Different instance types indicate different emphasis on each aspect of capabilities, such as comprehensive computing power, network bandwidth, a network latency, IOPS, storage bandwidth, and memory access. For example, the memory-intensive instance series on Huawei Cloud (huaweicloud.com) include a memory instance and a high-performance network that are equipped with a Huawei-developed Kunpeng 920 processor and a 25GE intelligent high-speed network interface card that provide a maximum value of 480 GB based on DDR4 and that are good at processing large scale memory datasets and high-performance network scenarios.

FIG. 3(d) is a schematic diagram of an example of a requirement collection interface according to an embodiment of this application. A user may select an instance type and a total resource quantity on the interface in FIG. 3(d). In an "instance type" column, the user may input or select a tag of the instance type, such as a "memory-intensive instance" or a "big data instance". Optionally, the user may select tags of a plurality of instance types at the same time.

In a possible implementation, the foregoing resource performance information may be combined in any form, so that the user can filter in a plurality of dimensions such as an instance type, a service scenario, and an underlying resource performance parameter.

It should be noted that, when the user selects various tags such as the "service scenario" and the "instance type", the tags are essentially used to describe performance of an underlying resource, but the tags describe a combination form of the underlying resource performance parameter. For example, a "memory-intensive instance" can be used to represent an instance resource whose underlying resource performance parameters meet the following conditions: (1) CPU model: Intel® Xeon® Scalable processor (2) CPU fundamental frequency: 3.0 GHz (3) Maximum network transmission packet: 5 million or 10 million PPS (4) Memory type: DDR4 (5) Maximum internal network bandwidth: 40 Gbps, 25 Gbps, or 17 Gbps (6) network interface card model: Huawei-developed 25GE intelligent high-speed network interface card.

In an optional implementation, the service requirement may further include price information. The price information may be a total price of resources or a unit price of the resources, or may be represented as an upper limit or a lower limit of a price.

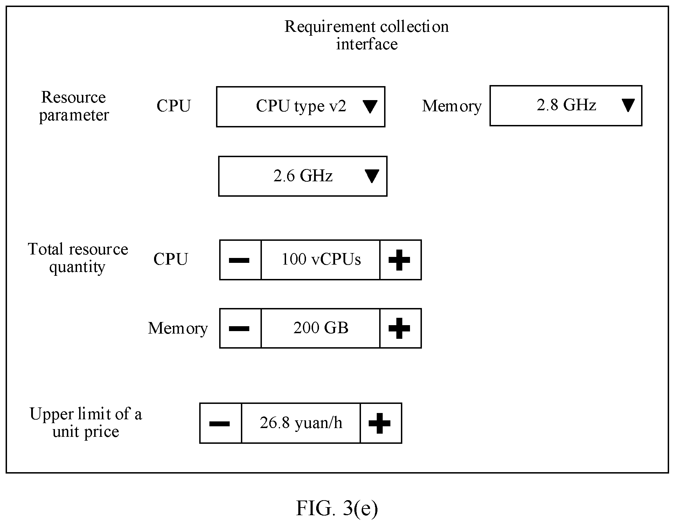

FIG. 3(e) is a schematic diagram of an example of a requirement collection interface according to an embodiment of this application. A user inputs, in the interface in FIG. 3(e), an upper limit of a price as "26.8 yuan/h".

In a possible implementation, the unit price herein is a price of a resource combination in a minimum unit. For example, in the requirement collection interface in FIG. 3(e), the resource combination in the minimum unit may be a sum of prices of one vCPU and 2 GB memory that meet limitation conditions of a "resource parameter". Optionally, the unit price may also be an average unit price of an instance that meets the conditions.

In an optional implementation, the service request may further include a filter rule. The filter rule may include price preferred, performance preferred, region preferred, custom preferred or other rules. Rule example: Price preferred means that the cloud platform preferentially returns a resource combination with a lower price on a premise that the preceding requirements input by the users are met. Similarly, performance preferred returns a purchase combination of instances with better performance. Region preferred returns resources in a same region or availability zone. Custom preferred means that the cloud platform matches the resource combination that meets the service requirements based on the user-defined mode of priority. It should be noted that the "resource combination" herein may be combined to a cloud service solution. In other words, the cloud service solution includes a resource combination.

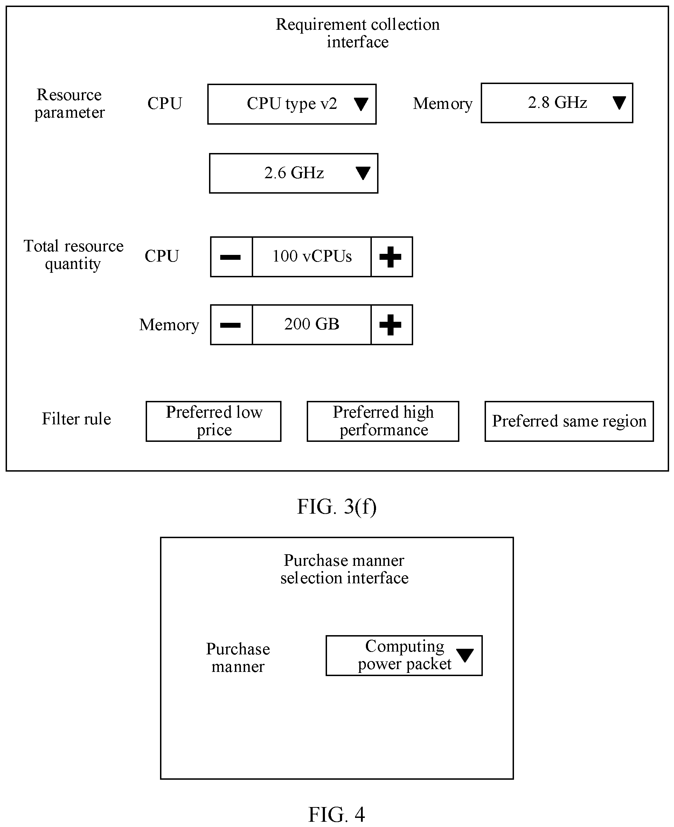

FIG. 3(f) is a schematic diagram of an example of a requirement collection interface according to an embodiment of this application. A user may select a tag in a "filter rule" in the interface in FIG. 3(f): preferably selecting a low price, preferably selecting high performance, and preferably selecting a same region. Optionally, the user may select one or more tags.

Optionally, FIG. 4 further provides a schematic diagram of an example of a purchasing manner selection interface. Before purchasing a resource according to the method in the embodiment of this application, the user may enter, by selecting a purchasing manner tag in a "computing power packet" shown in FIG. 4, the purchasing manner interface provided in the embodiment. In the embodiment of this application, computing power of an instance is abstracted into resource performance and a total resource quantity. The "computing power packet" is merely used as an example of a name of a purchasing manner, to help a reader better understand the method provided in the embodiment of this application.

Step 120: Generate one or more resource cloud service solutions based on the service request.

The cloud platform 003 generates, based on a service request sent by the terminal, one or more cloud service solutions that meet a service requirement of the user. The request includes one or more of the following content: a total resource quantity, a resource performance parameter, a filter rule, price information and the like. The resource combination includes a specification and a quantity of instances. In a possible manner, at least one cloud service solution includes a plurality of virtual machines.

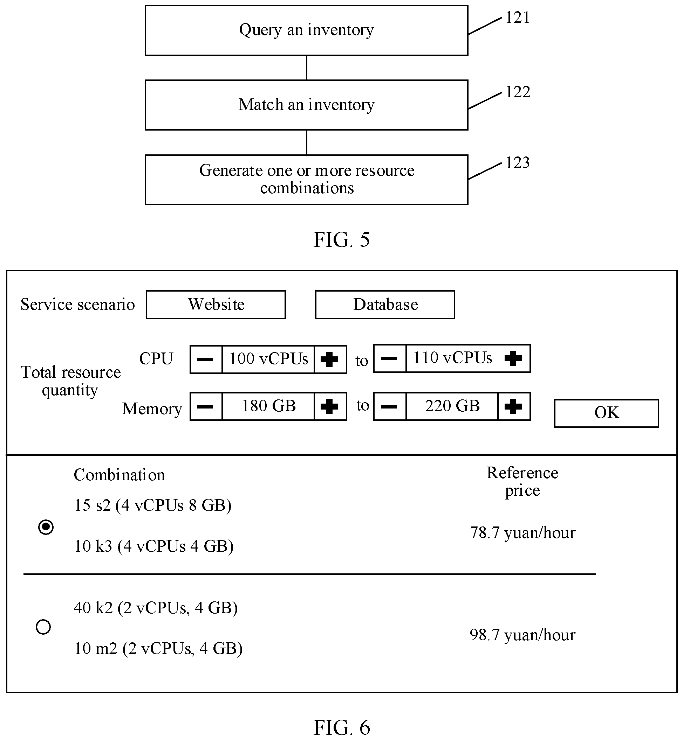

FIG. 5 is a schematic flowchart of an example of a method for generating the resource combination by a cloud platform according to an embodiment of this application. The method includes steps 121 to 123. Specific descriptions are as follows:

Step 121: Query an inventory

Corresponding to various types of information input by a user when the user purchases a resource, the cloud platform abstracts computing power of each instance into two types of information: a performance type and a numerical type. Each instance released on the cloud platform has the two types of parameters. Specifically:
The performance type corresponds to the resource performance information in the foregoing steps, and is used to describe an inherent capability of an underlying hardware facility corresponding to an instance specification, for example, a CPU model, a CPU dominant frequency, a CPU turbo, a memory model, a memory dominant frequency, a type of a local disk, a GPU model, or network performance. Refer to an example shown in the following Table 1:

| Resource | Attribute | Type | Value | Implication |
|---|---|---|---|---|
| vCPU | Frequency | Capability type | 2.5 GHz | vCPU main screen |
| vCPU | Type | Capability type | v3 | vCPU model |
| Memory | Frequency | Capability type | 2.8 GHz | Memory main screen |
| Network | Latency | Capability type | 0.01 ns | Network latency performance |

Numeric type may refer to a quantity or a size of various resources (computing, storage, and network) allocated to different instances after a physical machine is split by using a virtualization technology. For example, a quantity of vCPUs, a size of memory, a size and quantity of local disks, and a size of bandwidth. Refer to an example shown in the following Table 2:

| Resource | Attribute | Type | Value | Implication |
|---|---|---|---|---|
| vCPU | Quantity | Numeric type | 2 | Quantity of vCPUs |
| Memory | Size | Numeric type | 4 GB | Memory |
| Network | Bandwidth | Numeric type | 0.75 G/s | Network bandwidth |

The bandwidth may be a reference bandwidth or a maximum bandwidth.

Optionally, the numeric type may further include a price, for example, the price corresponds to a unit price obtained after the resources in Table 1 and Table 2 are combined. As shown in Table 3:

| | Attribute | Type | Value | Implication |
|---|---|---|---|---|
| Price | Size | Numeric type | 1.4 yuan | Unit price |

For example, the unit price refers to a price of one month or one hour in a yearly/monthly or pay-as-you-use manner.

Optionally, the CPU, the memory, and the network may be further released externally based on a base value and a tier multiple. Refer to an example shown in Table 4.

| Resource | Attribute | Type | Value | Implication |
|---|---|---|---|---|
| vCPU | Tier value | Numeric type | 1, 2, 4, 6, 8... | vCPU tier value |
| Memory | Tier value | Numeric type | 1,2,4,6,8... | Memory tier value |
| Network | Tier value | Numeric type | 0.1, 0.2, 0.35, 0.75... | Network tier value |

For example, in Table 4, a vCPU base value is 1, and then 2, 4, 6, 8, and the like. A basic size of the memory is 1 GB, followed by 2 GB, 4 GB, 6 GB, 8 GB, and the like. A base value of basic network bandwidth is 0.1 Gbit/s, followed by 0.2 Gbit/s, 0.35 Gbit/s, 0.75 Gbit/s, and the like.

In a possible implementation, the cloud platform first queries an inventory based on the performance type of information in a service request, finds a resource that meets conditions, and then performs matching based on the numeric type of information, to finally meet an instance combination of the service request.

For example, in an implementation, after obtaining the service request, the cloud platform, based on a condition that meets the capability type of information in a user purchase request, queries the current inventory and generates an available inventory record. For example, if the service request requires that the CPU dominant frequency is 2.5 GHz and the memory dominant frequency is 2.8 GHz, the inventory record that meets the conditions is shown in Table 5.

| Model ID | Total CPU quantity | Total memory quantity | Unit price |
|----------|--------------------|-----------------------|------------|
| 048 | 3000 | 6000 | 1.2 |
| 049 | 2000 | 5000 | 2.8 |

For details about the model and unit price, see the following description. Optionally, the content in the inventory table may further include more information, for example, a region in which a resource is located.

Step 122: Match an inventory

The cloud platform matches the inventory records that meet the conditions based on the numeric type of information. In a possible implementation, first, a queried inventory record (a resource that meets the capability type) is obtained. Then, an inventory matching function is established based on a total quantity of resources in the service request, and then, an objective function based on a filter rule is established. For example, the filter rule may be low price preferred, performance preferred, or other rules. Finally, a restraint condition is determined, and an optimization model is solved, to obtain one or more resource combination manners.
The low price preferred is used as the filter rule. An example of implementation is as follows, specifically:

(1) Obtain the queried inventory record, record the resource in the inventory as $r = r_i(r_{i0}, r_{i1}, \cdots r_{im})$, and record a total quantity of each instance in the inventory as $C_1$, where i indicates an instance model resource, and **(0,1,** ... **, m - 1)** indicates the resource number in each dimension. For example, if 0 indicates the CPU, 1 indicates the memory, and 2 indicates the network bandwidth, then $(r_{10}, r_{i1}, \cdots r_{im})$ is used to describe the foregoing resource capacity in each dimension.

In addition, a unit price of a resource in the inventory is recorded as , where i corresponds to a price of a single resource of a model. The price of a single resource may be understood as a price of an instance resource of the minimum capacity of the model released on the cloud platform.
In a possible implementation, a same model may correspond to a plurality of instance specification models, and most capability type of parameters of the instance specification models are usually the same, but a quantity of CPUs and a size of memory are usually different. Optionally, the same model may have instances with a same CPU/memory ratio.
Optionally, the instance specification released by the cloud platform may be in a form of an integer multiple of the foregoing single resource, and the price is in a form of an integer multiple of a price of the foregoing single resource.
Optionally, the instance specification released by the cloud platform may not be in the form of the integer multiple of the foregoing single resource, but is released in a manner of a tier value, and a tier value of each resource may be different. For example, a CPU base value of an instance is 2, followed by 4, 8, 16, and the like. A base value of network bandwidth is 0.1 Gbit/s, followed by 0.2 Gbit/s, 0.35 Gbit/s, 0.75 Gbit/s, and the like. The price of the instance released on the cloud platform is not charged in the foregoing form of the integer multiple of the unit price or charged based on other price rules. In a possible implementation, in this step, an impact of these tier values on the sellable resources needs to be considered, instead of merely recording the price of the single resource.
However, in the following example in the embodiment of this application, an ideal case in which the instance specification is an integer multiple of a single resource is provided as an example. However, this does not mean that a problem of a tier value and an instance charging manner does not need to be considered in the method according to this application.
(2) Create an inventory matching function based on the total resource quantity in the service request. For example, in a possible implementation method, HighR - (High$R_0$, High$R_1$, $\cdots$, High$R_m$ ) and lowR - (low$R_0$, low$R_1$, $\cdots$, low$R_m$) respectively indicates a function that meets an upper limit of the user request and a function that meets a lower limit of the user request, where R represents a quantity of computing power resources requested by the user, and 0 to m represent quantities of resources requested in each computing power dimension. The quantity of resources of an instance model applied for in a total inventory $r = r_t$ is recorded as $N_t$.
(3) Determine the objective function. In a possible implementation, the objective function may be an optimization function min $\sum_{i=0}^{n} N_i \cdot W_i$ , that is, a final total purchase price is the lowest. It should be noted that the objective function may be a default rule of a server, or may be a filter rule selected by the user.
(4) Determine the restraint condition and solve the optimization model. In a possible implementation, the restraint condition may be that a resource share applied for from $r = r_i$ can meet a request R of the user. Optionally, the request R of the user may include an upper limit highR and a lower limit lowR.

For example, in an implementation, if the user further configures a maximum price P, the restraint condition may be expressed as:

$$\begin{cases} \text{highR}_j \geq \displaystyle\sum_{i=0}^{n} N_i * r_{ij} \geq \text{lowR}_j \ \ \forall j \in \{0,1,\ldots,m-1\} \\ \displaystyle\sum_{i=0}^{n} N_i \cdot W_i < P \\ N_i \leq C_i, \text{ and } N_i \text{ is an integer} \end{cases}$$

To further describe a process of solving the foregoing optimization model, the following uses underlying resources in two dimensions: CPU and memory as content of a "computing power packet" purchase request of the user as an example for description.

    a. The server receives a purchase request from a user A that requires at least 100 CPUs and 300 GB memory, where the CPU type requires to be Intel Cascade Lake.
    b. According to the inventory query result, there are three types of model resources whose CPU type is Intel Cascade Lake.

40 resources whose model ID is 001 and the ratio of CPU to memory is 1:2. The unit price is 1.

50 resources whose model ID is 002 and the ratio of CPU to memory is 1:4. The unit price is 1.5.

100 resources whose model ID is 003 and the ratio of CPU to memory is 1:2. The unit price is 0.5.

In this case, the foregoing solution model is substituted:

If i=3, it represents that there are three types of model resources that meet the requirement. If m=2, it represents that two types of requested resources are respectively CPU and memory. The unit price of each inventory is as follows: $W_0$=1, $W_1$=1.5, $W_2$=0.5.

The purchase request of the user A is r= $r_i$($r_{i0}$, $r_{i1}$, $r_{i2}$), where $r_0$ indicates a capacity of an inventory 001, $r_{00}$ indicates a resource of the inventory 001 in a CPU dimension, and $r_{01}$ indicates a resource of the inventory 001 in a CPU dimension. $r_1$ indicates a capacity of an inventory 002, $r_{10}$ indicates a resource of the inventory 002 in a CPU dimension, and $r_{11}$ indicates a resource of the inventory 002 in a CPU dimension. $r_2$ indicates a capacity of an inventory 003, $r_{20}$ indicates a resource of the inventory 003 in a CPU dimension, and $r_{11}$ indicates a resource of the inventory 003 in a CPU dimension.

A request R of the user A includes a resource lower limit R (100, 300), that is, lowR = R (100, 300).

c. The objective function is $\sum_{i=0}^{n} N_i \cdot W_i$ , and the solved $N_i$ is a quantity of copies respectively obtained from the foregoing three model resources.

e. Restraints:

$$\begin{cases} N_0 * r_0 + N_1 * r_1 + N_2 * r_2 \geq R(100,300) \\ N_0 \leq 40, \ \ N_1 \leq 50, N_2 \leq 100 \end{cases}$$

f. An optical solution is solved by using an integer programming problem resolving method. For example, the optimal solution may be solved by using a cutting plane resolving method, and the optimal solution is $N_0$ = 0, $N_1$ = 30, and $N_2$ = 100. After the foregoing model is established, a common solution method in integer programming may be used to solve an optimal solution.

Step 123: Generate one or more resource combinations.

One or more resource combination results may be obtained based on a result of solving the optimization model, and the result includes a model and a quantity of instances.

In a possible implementation, the model and the quantity of instances are the specification and the quantity of instances that are returned to a terminal. In other words, one model corresponds to only one instance specification. For details about relationship between a model and an instance specification, see the preceding description.

In a possible implementation, the model and the quantity of the instances are not specification and the quantity of instances that are returned to the terminal. In other words, one model corresponds to a plurality of instance specifications. For example, c6.large.2, c6.xlarge.2, c6.2xlarge.2 and c6.3xlarge.2 specifications on Huawei Cloud are different specifications of a same model. They have a same capability type of parameter (such as a CPU model) and a same CPU/memory ratio (such as 1:2), but a quantity of CPUs and a size of memory are different, which are respectively 2 vCPUs|4 GB, 4 vCPUs|8 GB, 8 vCPUs|16 GB and 12 vCPUs|24 GB. In a possible implementation, after a model and a quantity (which indicates a quantity of a single resource or a minimum sellable unit resource) are solved, a specific instance specification and quantity corresponding to the model further need to be allocated. An allocation manner of this part is not limited in this application.

Step 130: Provide the foregoing generated cloud service solution for the terminal, where at least one cloud service solution includes a plurality of virtual machines.

The cloud platform provides the foregoing generated cloud service solution for the terminal, where at least one cloud service solution includes a plurality of virtual machines, and a total resource quantity of the virtual machines in the foregoing cloud service solution meets information about a total resource quantity in the service request. The foregoing "providing" may be sending. In other words, the cloud platform sends the foregoing generated cloud service solution to the terminal. In a possible implementation, the terminal receives a return interface sent by a server.

FIG. 6 is a schematic diagram of an example of a return interface according to this application. In the interface shown in FIG. 6, the user selects "Website" and "Database" as service scenarios, and the user inputs an upper limit and a lower limit of a purchased CPU quantity: 100 vCPUs and 110 vCPUs, and an upper limit and a lower limit of a purchased memory quantity: 180 GB memory and 220 GB memory as a total quantity of required resources. In a possible implementation, after the user taps the "Confirm" button, the cloud platform returns a result of a matched cloud service solution. The cloud service solution includes the foregoing resource combinations, including the specification and quantity of instances. As shown in FIG. 6, the interface includes two resource purchase combinations: combination 1 includes 15 s2 instances and 10 k3 instances, and combination 2 includes 40 k2 instances and 10 m3 instances. A reference price is 78.7 yuan/hour. In a possible implementation, the two resource combinations are two purchase combinations with low prices recommended by the cloud platform, and performance of the second combination is better than that of the first combination.

Optionally, the user may further modify the purchase combination returned in FIG. 6. For example, the user may click to enter a detailed information interface of the resource combination, modify the instance specification and quantity in the resource combination, and place an order based on the modified resource combination.

An embodiment of this application further provides an apparatus 210. The apparatus may be deployed on a cloud platform 003, and is configured to implement the method for purchasing a resource on the cloud platform 003 provided in embodiments of this application.

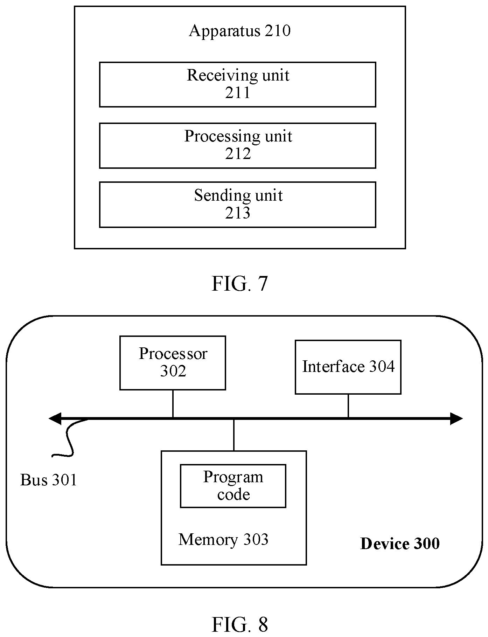

An embodiment of this application further provides an apparatus 210 for providing a cloud service. The apparatus is deployed on a cloud platform 003. The apparatus 210 may include one or more modules (not shown in the figure), and may implement a function of providing a cloud service. FIG. 7 is a schematic diagram of an example of a structure of an apparatus 210 according to an embodiment of this application. An environment information prediction apparatus 210 in the figure includes a receiving module 211, a sending module 212, and a service module 213.

The receiving module 211 is configured to receive a service request sent by a terminal, where the service request includes information about a total resource quantity required by a user.

The sending module 212 is configured to provide one or more cloud service solutions for a terminal, where at least one of the one or more cloud service solutions includes a plurality of virtual machines, and a total resource quantity of the virtual machines in the one or more cloud service solutions meets the information about the total resource quantity in the service request.

In a possible implementation, the information about the total resource quantity includes at least one of the following information: information about total CPU quantity and information about total memory quantity.

In a possible implementation, the service request further includes resource performance information, and resource performance of the virtual machines in the one or more cloud service solutions meets the resource performance information in the service request.

In a possible implementation, the resource performance information includes an underlying resource performance parameter, and the underlying resource performance parameter includes at least one of the following: a CPU model, a CPU frequency, a memory model, a memory frequency, a GPU parameter, network performance, and storage read/write performance.

Optionally, the resource performance information includes at least one of the following information: a virtual machine capability type and a service scenario type, where the virtual machine capability type indicates computing, storage, and network capabilities of the virtual machines, and the service scenario type indicates a service scenario to which the virtual machines is applicable.

In a possible implementation, the information about the total CPU quantity includes at least one of the following information: a total CPU quantity, a maximum value of the total CPU quantity and a minimum value of the total CPU quantity.

In a possible implementation, the information about the total memory quantity includes at least one of the following information: a total memory quantity, a maximum value of the total memory quantity and a minimum value of the total memory quantity.

Optionally, the service request further includes price information specified by the user, and a price of the one or more cloud service solutions meets the price information specified by the user.

The service module 213 is configured to provide a corresponding cloud service for the user based on a target cloud service solution selected by the user from the one or more cloud service solutions.

FIG. 8 is a schematic structural diagram of an example of a computing device 300 according to an embodiment of this application. The device may be any computing device, and may be configured to implement a function implemented by a server 006 on a cloud platform 003. A user of the cloud platform may access the computing device 300 by using a terminal device to purchase a service on the cloud platform. In other words, the cloud platform may provide the cloud service in this embodiment of this application based on the computing device 300.

As shown in FIG. 8, the computing device 300 includes a bus 301, a processor 302, a memory 303 and an interface 304. The processor 302 and the memory 303 communicate with each other by using the bus 301.

The bus 301 is configured to connect the processor 302, the memory 303, the interface 304, and another possible component, and may include one or more of an address bus, a data bus, a control bus, an extended bus, and a local bus. For ease of representation, only one thick line is used to represent the bus in the figure, but this does not mean that there is only one bus or only one type of bus. The bus 301 applies a standard such as a peripheral component interconnect standard (peripheral component interconnect, PCI) bus or an extended industry standard architecture (extended industry standard architecture, EISA) bus.

The processor 302 may be a central processing unit (Central Processing Unit, CPU). In addition, the processor 302 may further include one or more of other types of processor chips such as a graphics processing unit (graphics processing unit, GPU), a neural network processing unit (Neural network Processing Unit, NPU), and an FPGA (Field Programmable Gate Array). The processor 302 may perform the steps of the method for providing a cloud service in embodiments of this application.

The memory 303 may include one or more of any other memory, storage device, or storage medium that can be used to store and save information, such as a random access memory (random access memory, RAM), a read-only memory (read-only memory, ROM), a flash memory (flash EPROM), a hard disk drive (hard disk drive, HDD), or a solid state drive (solid state drive, SSD). The memory 403 stores executable program code. The executable program code may be executed by using the processor 302 to implement the steps of the method for providing a cloud service in embodiments of this application.

The interface 304 may be a networking interface card (Networking Interface Card, NIC) or another type of transceiver device, a host bus adaptor (Host Bus Adaptor, HBA), or the like.

Embodiments in this specification are all described in a progressive manner. For same or similar parts in the embodiments, reference may be made to each other. Each embodiment focuses on a difference from other embodiments. For brief descriptions of some embodiments, refer to descriptions of other embodiments.

The foregoing provides specific implementations of this application. It should be understood that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

**Claims**

1. A method for providing a cloud service, wherein the method comprises:

   receiving a service request sent by a terminal, wherein the service request comprises information about a total resource quantity required by a user; and
   providing one or more cloud service solutions for the terminal, wherein at least one of the one or more cloud service solutions comprises a plurality of virtual machines, and a total resource quantity of the virtual machines in the one or more cloud service solutions meets the information about the total resource quantity in the service request.

2. The method according to claim 1, wherein the information about the total resource quantity comprises at least one of the following information: information about a total CPU quantity and information about a total memory quantity.

3. The method according to claim 1 or 2, wherein the service request further comprises resource performance information, and resource performance of the virtual machines in the one or more cloud service solutions meets the resource performance information in the service request.

4. The method according to claim 3, wherein the resource performance information comprises an underlying resource performance parameter, and the underlying resource performance parameter comprises at least one of the following: a CPU model, a CPU frequency, a memory model, a memory frequency, a GPU parameter, network performance, and storage read/write performance.

5. The method according to claim 3 or 4, wherein the resource performance information comprises at least one of the following information: a virtual machine capability type and a service scenario type, wherein the virtual machine capability type indicates computing, storage, and network capabilities of the virtual machine, and the service scenario type indicates a service scenario to which the virtual machine is applicable.

6. The method according to any one of claims 2 to 5, wherein the information about the total CPU quantity comprises at least one of the following information: the total CPU quantity, a maximum value of the total CPU quantity, and a minimum value of the total CPU quantity; and the information about the total memory quantity comprises at least one of the following information: the total memory quantity, a maximum value of the total memory quantity, and a minimum value of the total memory quantity.

7. The method according to any one of claims 1 to 6, wherein the service request further comprises price information specified by the user, and a price of the one or more cloud service solutions meets the price information specified by the user.

8. The method according to any one of claims 1 to 7, wherein the method further comprises: providing the user with the cloud service based on a target cloud service solution selected by the user from the one or more cloud service solutions.

9. An apparatus for providing a cloud service, wherein the apparatus comprises:

a receiving module, configured to receive a service request sent by a terminal, wherein the service request comprises information about a total resource quantity required by a user; and
a sending module, configured to provide one or more cloud service solutions for the terminal, wherein at least one of the one or more cloud service solutions comprises a plurality of virtual machines, and a total resource quantity of the virtual machines in the one or more cloud service solutions meets the information about the total resource quantity in the service request.

10. The apparatus according to claim 9, wherein the information about the total resource quantity comprises at least one of the following information: information about a total CPU quantity and information about a total memory quantity.

11. The apparatus according to claim 9 or 10, wherein the service request further comprises resource performance information, and resource performance of the virtual machines in the one or more cloud service solutions meets the resource performance information in the service request.

12. The apparatus according to claim 11, wherein the resource performance information comprises an underlying resource performance parameter, and the underlying resource performance parameter comprises at least one of the following: a CPU model, a CPU frequency, a memory model, a memory frequency, a GPU parameter, network performance, and storage read/write performance.

13. The apparatus according to claim 11 or 12, wherein the resource performance information comprises at least one of the following information: a virtual machine capability type and a service scenario type, wherein the virtual machine capability type indicates computing, storage, and network capabilities of the virtual machine, and the service scenario type indicates a service scenario to which the virtual machine is applicable.

14. The apparatus according to any one of claims 10 to 13, wherein

the information about the total CPU quantity comprises at least one of the following information: the total CPU quantity, a maximum value of the total CPU quantity, and a minimum value of the total CPU quantity; and

the information about the total memory quantity comprises at least one of the following information: the total memory quantity, a maximum value of the total memory quantity, and a minimum value of the total memory quantity.

15. The apparatus according to any one of claims 9 to 14, wherein the service request further comprises price information specified by the user, and a price of the one or more cloud service solutions meets the price information specified by the user.

16. The apparatus according to claim 9 to 15, wherein the apparatus further comprises:
a service module, configured to provide the cloud service for the user based on a target cloud service solution selected by the user from the one or more cloud service solutions.

17. A device, wherein the device comprises a memory and a processor, and the processor is configured to execute instructions stored in the memory, so that the device performs the method according to any one of claims 1 to 8.

18. A non-volatile storage medium, wherein the non-volatile storage medium comprises instructions; and when the instructions are executed by a computing device, the computing device is enabled to perform the method according to any one of claims 1 to 8.

Data center 004

Virtual machine resource pool
005

Virtual machine
VM 1

Virtual machine
VM 2

...

Virtual machine
VM 3

Cloud platform 003

Network 002

Terminal 001

FIG. 1

Receive a service request sent by a terminal ⟋ 110

Generate one or more cloud service solutions based on the service request ⟋ 120

Provide the foregoing generated cloud service solution for the terminal, where at least one cloud service solution includes a plurality of virtual machines ⟋ 130

FIG. 2

**Requirement collection interface**

| Resource parameter | CPU | CPU type v2 ▼ | Memory | 2.8 GHz ▼ |
|---|---|---|---|---|
| | | 2.6 GHz ▼ | | |

| Total resource quantity | CPU | ▬ 100 vCPUs ✚ |
|---|---|---|
| | Memory | ▬ 200 GB ✚ |

FIG. 3(a)

**Requirement collection interface**

| Resource parameter | CPU | CPU type v2 ▼ | Memory | 2.8 GHz ▼ |
|---|---|---|---|---|
| | | 2.6 GHz ▼ | | |

| Total resource quantity | CPU | ▬ 100 vCPUs ✚ to ▬ 110 vCPUs ✚ |
|---|---|---|
| | Memory | ▬ 180 GB ✚ to ▬ 220 GB ✚ |

FIG. 3(b)

Requirement collection
interface

Service scenario | Website | Machine learning

Total resource quantity

CPU — 100 vCPUs +

Memory — 200 GB +

FIG. 3(c)

Requirement collection
interface

Instance type | Memory-intensive instance | Big data instance

Total resource quantity

CPU — 100 vCPUs +

Memory — 200 GB +

FIG. 3(d)

Requirement collection
interface

Resource parameter

CPU

| CPU type v2 ▼ |

Memory

| 2.8 GHz ▼ |

| 2.6 GHz ▼ |

Total resource quantity

CPU

| ▬ | 100 vCPUs | ✚ |

Memory

| ▬ | 200 GB | ✚ |

Upper limit of a unit price

| ▬ | 26.8 yuan/h | ✚ |

FIG. 3(e)

Requirement collection
interface

Resource parameter | CPU | CPU type v2 ▼ | Memory | 2.8 GHz ▼

2.6 GHz ▼

Total resource quantity | CPU | — | 100 vCPUs | ✚

Memory | — | 200 GB | ✚

Filter rule | Preferred low price | Preferred high performance | Preferred same region

FIG. 3(f)

Purchase manner
selection interface

Purchase manner | Computing power packet ▼

FIG. 4

```
┌─────────────────────────────────────┐
│          Query an inventory          │────  121
└─────────────────────────────────────┘
                    │
┌─────────────────────────────────────┐
│          Match an inventory          │────  122
└─────────────────────────────────────┘
                    │
┌─────────────────────────────────────┐
│    Generate one or more resource     │────  123
│             combinations             │
└─────────────────────────────────────┘
```

FIG. 5

Service scenario      [ Website ]        [ Database ]

Total resource quantity

CPU      [ − | 100 vCPUs | ✚ ]  to  [ − | 110 vCPUs | ✚ ]

Memory   [ − | 180 GB | ✚ ]  to  [ − | 220 GB | ✚ ]        [ OK ]

Combination                                    Reference price

⦿   15 s2 (4 vCPUs 8 GB)

    10 k3 (4 vCPUs 4 GB)                        78.7 yuan/hour

○   40 k2 (2 vCPUs, 4 GB)

    10 m2 (2 vCPUs, 4 GB)                       98.7 yuan/hour

FIG. 6

Apparatus 210

Receiving unit
211

Processing unit
212

Sending unit
213

FIG. 7

Processor
302

Interface 304

Bus 301

Program
code

Memory 303

Device 300

FIG. 8

## INTERNATIONAL SEARCH REPORT

| International application No. |
|---|
| **PCT/CN2022/072430** |

**A.    CLASSIFICATION OF SUBJECT MATTER**

G06Q 30/02(2012.01)i

According to International Patent Classification (IPC) or to both national classification and IPC

**B.    FIELDS SEARCHED**

Minimum documentation searched (classification system followed by classification symbols)

G06Q; G06F; H04L

Documentation searched other than minimum documentation to the extent that such documents are included in the fields searched

Electronic data base consulted during the international search (name of data base and, where practicable, search terms used)

CNKI, CNPAT, WPI, EPODOC, GOOGLE, IEEE: 云, 云服务, 平台, 虚拟机, 虚拟资源, 资源, 申请, 请求, 分配, cloud, client, request, CPU, VM, virtual machine

**C.    DOCUMENTS CONSIDERED TO BE RELEVANT**

| Category* | Citation of document, with indication, where appropriate, of the relevant passages | Relevant to claim No. |
|---|---|---|
| X | CN 104735102 A (GUANGZHOU LANCUI TRADE CO., LTD.) 24 June 2015 (2015-06-24) description, paragraphs [0078]-[0087] and [0138]-[0188], and figures 5-10 | 1-18 |
| A | CN 106951330 A (ZHENGZHOU UNIVERSITY OF LIGHT INDUSTRY) 14 July 2017 (2017-07-14) entire document | 1-18 |
| A | CN 111381936 A (SUN YAT-SEN UNIVERSITY) 07 July 2020 (2020-07-07) entire document | 1-18 |
| A | US 2020059403 A1 (VMWARE, INC.) 20 February 2020 (2020-02-20) entire document | 1-18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 March 2022** | **13 April 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

| International application No. |
| --- |
| **PCT/CN2022/072430** |

| Patent document cited in search report | | | Publication date (day/month/year) | Patent family member(s) | Publication date (day/month/year) |
| --- | --- | --- | --- | --- | --- |
| CN | 104735102 | A | 24 June 2015 | None | |
| CN | 106951330 | A | 14 July 2017 | None | |
| CN | 111381936 | A | 07 July 2020 | None | |
| US | 2020059403 | A1 | 20 February 2020 | None | |

Form PCT/ISA/210 (patent family annex) (January 2015)